# EUROPEAN PATENT SPECIFICATION

(11) **EP 2 617 548 B1**
(45) Date of publication and mention of the grant of the patent: **31.08.2016**
(21) Application number: 11824991.1
(22) Date of filing: 01.09.2011
(51) Int. Cl.: B29C 33/40

(54) **USE OF A FORMING MOLD FOR YIELDING A MOLDED PRODUCT MADE FROM A SLURRY**
VERWENDUNG EINER FORM ZUM ERZEUGEN EINES FORMTEILS AUS SCHLICKER
UTILISATION D'UN MOULE DE FORMAGE POUR OBTENIR UN PRODUIT MOULÉ FABRIQUÉ À PARTIR D'UNE SUSPENSION

(30) Priority: 16.09.2010 JP 2010208113
(43) Date of publication of application: 24.07.2013
(73) Proprietor: NGK Insulators, Ltd., Nagoya-shi, Aichi 467-8530 (JP)
(72) Inventor: KANEKO, Kimihisa, Nagoya-shi Aichi 467-8530 (JP); YOSHIOKA, Kunihiko, Nagoya-shi Aichi 467-8530 (JP)
(74) Representative: Naylor, Matthew John
(86) International application number: PCT/JP2011/069870
(87) International publication number: WO 2012/035985

(56) References cited:
- EP-A1- 0 345 022
- EP-A1- 2 689 906
- GB-A- 2 281 561
- JP-A- 8 001 635
- JP-A- 9 193 164
- JP-A- 63 120 634
- JP-A- H10 501 480
- JP-A- 2006 264 225
- JP-A- 2007 307 752
- JP-U- 58 015 015
- JP-U- 59 005 317
- US-A- 5 922 260
- US-A1- 2009 226 685
- US-A1- 2010 201 018
- US-A1- 2012 240 383

## Description

### [Field of the Invention]

The present invention relates to the use of a forming mold for yielding a molded product made from a slurry.

### [Description of the Related Art]

US 2010/201018 A1 discloses a forming mold for molding a slurry, and a method for producing a molded body using the forming mold, wherein heat may be applied at a temperature in a range of the melting temperature of the mold release agent.

JP H 09193164 A discloses an injection mould to which a durable fluororesin layer is applied. A heat resistant adhesive is provided underneath the fluororesin layer.

Typically, molded products such as urethane molded products are produced by means of a forming mold through the following sequential steps. Firstly, a precursor of a molded product (e.g., a slurry) is poured into a space for forming a material (hereinafter referred to as a forming space) defined by a surface provided for forming an object material (hereinafter referred to as a forming surface) of the forming mold. Then, the slurry or the like is solidified (and dried), to thereby provide a molded product in the forming space. The forming mold is removed from the molded product (i.e., the molded product is released from the forming mold), to thereby separate the molded product.

During mold releasing, in some cases, a molded product adheres on the forming surface of the forming mold. In order to prevent adhesion of a molded product (i.e., to enhance mold-releasability), a fluororesin layer is provided on the forming surface of a forming mold. This technique is widely known in the art (see, for example, Japanese Patent Application Laid-Open (*kokai*) No. 2006-264225).

For example, the above Patent Document discloses that an Ni-containing under-plating layer is formed on the forming surface of a forming mold, and the under-plating layer is coated with a fluororesin layer. The Patent Document also discloses that the hardness of the forming surface of the forming mold is ensured by means of the under-plating layer formed through the treatment, and the fluororesin layer provides excellent mold-releasability.

### [Summary of the Invention]

However, in the case where a fluororesin layer is formed through a coating process as described in the above document, relatively large depressions (cavities) having, for example, a depth of 0.01 mm or more may be problematically formed in the surface portion of the fluororesin layer (i.e., the surface in direct contact with a slurry or the like (actual forming surface)). The large depressions are easily formed when the fluororesin layer is relatively thick. The large depressions are thought to be formed by, for example, removal of foam remaining in the fluororesin layer formed through a coating process.

Meanwhile, when the fluororesin layer is relatively thin, such large depressions are difficult to form. However, in the case where a slurry containing hard powder, in particular a ceramic slurry, is used, mold-releasability may be impaired due to surface wearing of the fluororesin layer, even though the mold is subjected to molding processes several times (e.g., about 10 times), which is problematic.

The present invention has been conceived in order to solve the problem. Thus, an object of the present invention is the use of a forming mold which is free from large depressions in the surface portion of the resin layer serving as an actual forming surface and which has high durability, for yielding a molded product made from a slurry.

Accordingly, the forming mold used in the present invention comprises a base member, a resin layer which is bonded to the base member and which serves as a forming surface, and a bonding layer which intervenes between the base member and the resin layer and which bonds the base member to the resin layer. Furthermore, the base member has a rigidity higher than that of the resin layer. In one embodiment of the present invention, the resin layer is formed of a fluororesin, and the base member is formed of a metal. As used herein, the term "rigidity" refers to a product (EI) of Young's modulus of material E [N/m²] and second moment of area I along the depth direction [m⁴].

The forming mold may be produced through, for example, bonding the resin layer onto the base member by use of an adhesive, and working the surface of the thus-bonded resin layer, to thereby realize the forming surface. Alternatively, the forming mold may be produced through, for example, providing a forming surface in the surface portion of a resin layer, and bonding the thus-formed resin layer onto the base member by use of an adhesive. The adhesive is formed from a material (i.e., a material for forming the bonding layer) containing no metallic element. Examples of such a material include an adhesive for bonding members formed of different materials.

Thus, according to the forming mold of the invention, the surface of the resin layer (i.e., the surface in direct contact with a slurry or the like (actual forming surface)) may be produced through working and molding or a similar process. Therefore, differing from the forming mold disclosed in the above document (i.e., a forming mold in which the fluororesin layer has been formed through a coating process), no large depressions are formed in the surface portion of the resin layer serving as an actual forming surface. Specifically, the maximum depth of the depressions unaviodably remaining in the surface portion (surface, flat portion) of the forming surface of the resin layer is preferably 0.007 mm or less.

In addition to the forming mold of the invention, the resin layer is bonded to the base member having a rigidity higher that of the resin layer. Therefore, as compared with a forming mold formed of only a resin layer, deformation of the resin layer is prevented, wherein dimensional precision of the resin layer serving as an actual forming surface can be further enhanced. Specifically, the flatness of the flat portion of the forming surface of the resin layer may be adjusted to 0.030 mm or less (described in detail hereinbelow).

In the forming mold of the present invention, the material forming the forming surface of the resin layer preferably contains no additive or primer. Generally, when the material forming the forming surface contains an additive or a primer, the resin content of the resin layer decreases, resulting in reduction in mold-releasability. That is, satisfactory mold-releasability can be attained on the basis of the above characteristic feature. Notably, the inside of the resin layer (a portion not forming the forming surface) may contain an additive or a primer.

In the forming mold of the present invention, the forming surface of the resin layer preferably has a contact angle with respect to water of 60° or more. More preferably, the forming surface of the resin layer has a contact angle with respect to water of 85° or more. Through controlling the contact angle, satisfactory mold-releasability can be attained.

In the forming mold of the present invention, the minimum thickness of the resin layer may be adjusted to 0.1 mm or more. Through the adjustment, the resin layer has a sufficient thickness. As a result, there can be prevented "impairment of mold-releasability due to surface wearing of the fluororesin layer" occurring when the resin layer is relatively thin. That is, durability of the forming mold can be enhanced. Such a characteristic feature cannot be attained by a forming mold disclosed in the above document (i.e., a forming mold in which the fluororesin layer has been formed through a coating process).

In a portion of the forming surface of the resin layer, the portion being present on a flat portion of the bonding surface of the base member, a step having a height of 0.1 mm or more may be formed. An edge of the step is formed at high precision to have any shape (e.g., rectangular edge, chamfered edge, R-shape edge). The step is formed in the aforementioned production method of the forming mold in which the resin layer is bonded to the base member, to form a resin-base integrated member, and the forming surface of the resin layer is produced through working and molding or a similar process. The above characteristic feature cannot be attained by the forming mold disclosed in the above document (i.e., a forming mold in which the fluororesin layer has been formed through a coating process).

The base member is formed of a metal; the resin layer is formed of "a resin material having a glass transition point of 130°C or higher"; and the bonding layer is formed of "a material having a glass transition point of 80°C or higher." More preferably, the bonding layer is formed of "a material having a glass transition point of 100°C or higher." Conventionally, there has been widely known a technique of applying a mold-release agent to a forming surface of a forming mold made of metal in order to enhance mold-releasability of a target material from the forming mold. In this technique, a material having a glass transition point lower than 60°C (e.g., fluorine-containing polymer) is used as a mold-releasing agent. Therefore, when the molded product produced by means of the forming mold is dried at 60°C or higher, the mold-release agent is softened, thereby impairing mold-releasability, which is problematic. In contrast, by virtue of the above characteristic feature, even when the molded product produced by means of a forming mold is dried at high temperature, no softening occurs in the resin layer and the bonding layer, whereby mold-releasability does not decrease.

### [Brief Description of the Drawings]

[FIG. 1] A partial cross-section of a forming mold according to one embodiment of the present invention.
[FIG. 2] A first step of a first method for producing the forming mold shown in FIG. 1.
[FIG. 3] A second step of the first method for producing the forming mold shown in FIG. 1.
[FIG. 4] A third step of the first method for producing the forming mold shown in FIG. 1.
[FIG. 5] A first step of a second method for producing the forming mold shown in FIG. 1.
[FIG. 6] A second step of the second method for producing the forming mold shown in FIG. 1.
[FIG. 7] A third step of the second method for producing the forming mold shown in FIG. 1.
[FIG. 8] A fourth step of the second method for producing the forming mold shown in FIG. 1.
[FIG. 9] A forming mold according to one embodiment of the present invention which mold is employed in measuring the flatness of the flat portion of the forming surface of the resin layer.

### [Modes for Carrying Out the Invention]

The forming mold used in the present invention is employed as a forming mold for yielding a molded product through a process which includes preparing a slurry from slurry raw materials including a ceramic material powder, a dispersion medium, a gelling agent, and a dispersing agent; and casting the slurry into the mold. In the forming mold used in the present invention, at least a portion of the mold has the characteristic features of the present invention, and preferably the entirety of the forming mold has the characteristic features of the present invention. In the case where the forming mold is composed of a plurality of members such as an upper half and a lower half, at least one member has the characteristic features of the present invention.

### (Configuration)

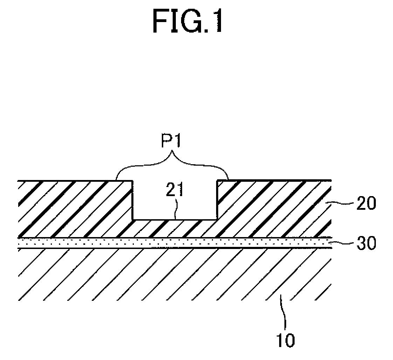

FIG. 1 is a partial cross-section of a forming mold according to one embodiment of the present invention. As shown in FIG. 1, the forming mold has a base member 10, a resin layer 20 whose surface serves as a "forming surface," and a bonding layer 30 for bonding the resin layer 20 to the base member 10. In this embodiment, the bonding surface of the base member 10 and that of the resin layer 20 are flat. As used herein, the term "forming surface" refers to a surface which defines the space for providing a molding space for producing a molded product and is a surface in direct contact with a molded product percursor (slurry, paste, etc.) cast into the molding space.

The base member 10 is formed of a metallic material such as aluminum alloy, stainless steel, titanium, or iron-based material. The base member 10 has a rigidity higher than that of the resin layer 20. In other words, the base member 10 can serve as a support base for preventing deformation of the resin layer 20.

The resin layer 20 is formed of a material which provides high mold-releasability, such as fluororesin (fluorine-containing compound), silicone resin (silicone compound), or PVA. Examples of the fluorine-containing compound include PTFE, PFA, ETFE, FEP, PVDF, PCTFE, and PFA. The material for forming the resin layer 20 preferably has a glass transition point of 130°C or higher.

The surface of the resin layer 20 (the upper surface in FIG. 1) serves as a "forming surface." In the embodiment shown in FIG. 1, the "forming surface" is flat, and a flat portion P1 is provided with a recess (step) 21. The recess (step) 21 may be omitted. The maximum depth of the depression (cavity) remaining in the "forming surface" of the flat portion P1 is 0.007 mm or less. The minimum thickness of the resin layer 20 (the minimum length in the longitudinal direction in FIG. 1) may be adjusted to 0.1 mm or more. The depth (height) of the recess (step) 21 may be adjusted to 0.1 mm or more. In the recess (step) 21, the part in which the side wall crosses the bottom wall assumes the shape of an arc, and the arc may have a radius of 0.05 mm or less. The thickness of the resin layer 20 is, for example, 0.1 to 10 mm. The flat portion P1 of the "forming surface" of the resin layer 20 has a flatness of 0.030 mm or less.

The material forming the "forming surface" preferably contains no additive or primer. Also, the "forming surface" preferably has a contact angle with respect to water of 60° or more (more preferably 85° or more). Through controlling the contact angle, excellent mold-releasability can be attained. The inside portion of the resin layer 20 (the portion not serving as the forming surface) may contain an additive or a primer.

The bonding layer 30 intervenes between the base member 10 and the resin layer 20, to thereby bond the resin layer 20 to the base member 10. Before carrying out bonding, the bonding surface of the base member 10 and that of the resin layer 20 may be subjected to a treatment for enhancing bonding strength between the two layers (e.g., surface roughening). The bonding layer 30 is formed from a material containing no metallic element. An example of the material is an adhesive for bonding members formed of different materials. Specific examples thereof include an epoxy-base adhesive. Examples of the epoxy-type adhesive include a 1:1 (by mass) mixture "EPOXY RESIN AV138" and "HARDNER HV998"(products of Nagase Chemtex Corporation). The bonding layer 30 has a thickness of, for example, 0.01 to 1 mm. The material for forming the bonding layer 30 preferably has a glass transition point of 80°C or higher.

### (First production method)

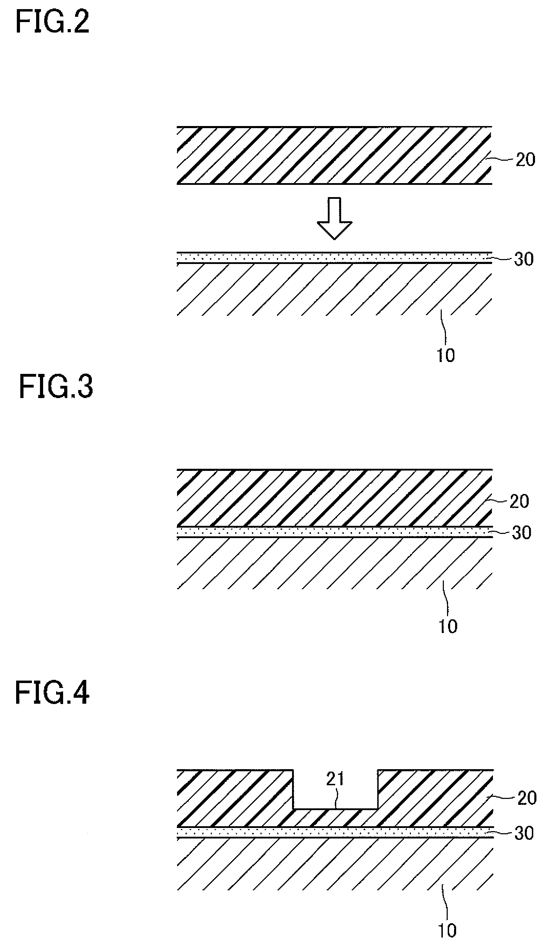

With reference to FIGs. 2 to 4, a first method for producing a forming mold having the aforementioned characteristic features will be described.

In the first production method, a resin plate corresponding to the resin layer 20 having no "forming surface" is produced through a known technique. Then, as shown in FIG. 2, the bonding layer 30 is formed on the bonding surface of the base member 10 through, for example, application of an adhesive. Alternatively, an adhesive may be applied to the bonding surface of the resin layer 20 (i.e., the surface opposite the "forming surface" side). An adhesive may be applied to the both bonding surfaces of the base member 10 and the resin layer 20.

Subsequently, as shown in FIG. 2, the bonding surface of the resin layer 20 (having no "forming surface") is bonded to the bonding surface of the base member 10. As a result, as shown in FIG. 3, the resin layer 20 (having no "forming surface") is bonded to the base member 10 by the mediation of the bonding layer 30. As shown in FIG. 4, through working the resin layer 20, the "forming surface" is provided. In the embodiment, the recess 21 may be formed through, for example, end milling. In order to ensure dimensional precision of the flat portion of the "forming surface" (more specifically, to remove unaviodably remaining depressions present in the flat portion to a maximum possible degree), the "forming surface" may be subjected to finish working. In this case, since the working is performed with the high-rigidity base member 10 as a base level, the precision in working is enhanced, as compared with the case of working a piece formed of only the resin layer. As a result, there is yielded a forming mold having high dimensional precision of the "forming surface" shown in FIG. 1. Notably, when the "first production method" is employed, among fluororesin materials for forming the resin layer 20, PTFE or ETFE is preferably employed, from the viewpoint of ease of mechanical working.

### (Second production method)

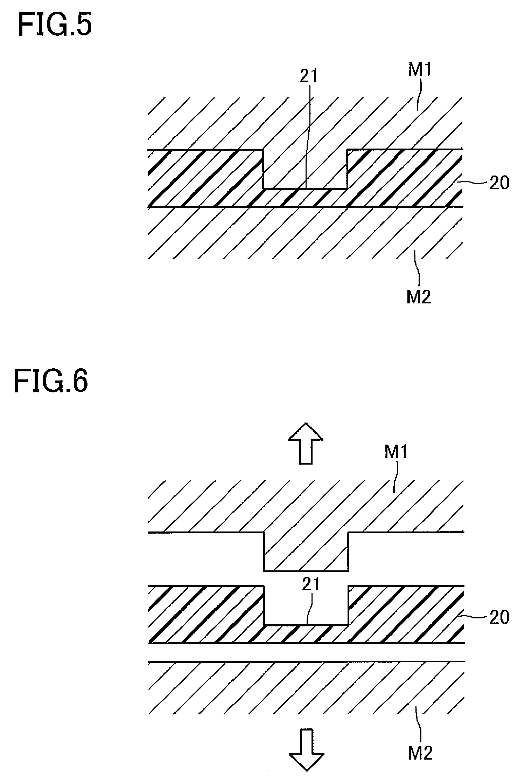

With reference to FIGs. 5 to 8, a second method for producing a forming mold having the aforementioned characteristic features will be described.

In the second production method, as shown in FIG. 5, the resin layer 20 having a "forming surface" is formed through injection molding by means of an upper mold M1 and a lower mold M2. Then, as shown in FIG. 6, the upper mold M1 and the lower mold M2 are removed, and the resin layer 20 having a "forming surface" is isolated. In the procedure, since the "forming surface" is provided through injection molding, the dimensional precision of the "forming surface" is enhanced.

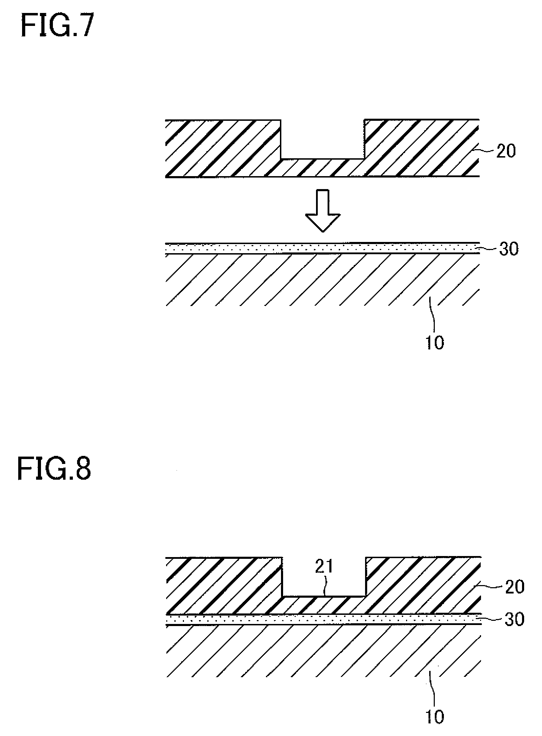

Subsequently, as shown in FIG. 7, the bonding layer 30 is formed on the bonding surface of the base member 10 through, for example, application of an adhesive. Alternatively, an adhesive may be applied to the bonding surface of the resin layer 20 (i.e., the surface opposite the "forming surface" side). An adhesive may be applied to the both bonding surfaces of the base member 10 and the resin layer 20.

Subsequently, as shown in FIG. 7, the bonding surface of the resin layer 20 (having a "forming surface") is bonded to the bonding surface of the base member 10. As a result, as shown in FIG. 8, the resin layer 20 (having a "forming surface") is bonded to the base member 10 by the mediation of the bonding layer 30. As a result, a forming mold having high dimensional precision of the "forming surface" shown in FIG. 1 is yielded. Notably, when the "second production method" is employed, among fluororesin materials for forming the resin layer 20, PFA is preferably employed, from the viewpoint of ease of injection-moldability.

### (Action and effect)

According to the embodiments of the forming mold of the present invention, the surface of the resin layer 20; i.e., the "forming surface" is provided through working (in first production method) or molding (in second production method). Therefore, differing from the forming mold disclosed in the above document (in Description of the Related Art) (i.e., a forming mold in which the fluororesin layer has been formed through a coating process), no large depression is formed in the surface portion of the resin layer serving as an actual forming surface.

In addition, the resin layer 20 is bonded to the base member 10 having a rigidity higher than that of the resin layer 20. Therefore, as compared with a forming mold formed of only a resin layer, deformation of the resin layer is prevented, wherein dimensional precision of the resin layer serving as an actual forming surface can be further enhanced.

Furthermore, since the resin layer 20 is integrated into the base member 10 via bonding, the thickness of the resin layer 20 can be adjusted as desired. Thus, the minimum thickness of the resin layer 20 can be adjusted to 0.1 mm or more. When the resin layer 20 is sufficiently thick, the aforementioned "impairment of mold-releasability due to surface wearing of the fluororesin layer" can be prevented. Although the bonding surface of the base member 10 serving as a supporting substrate for the resin layer 20 has no step (i.e., is flat), the depth (height) of the recess (step) 21 of the resin layer 20 can be adjusted to 0.1 mm or more. This cannot be attained by the forming mold disclosed in the above document (i.e., a forming mold in which the fluororesin layer has been formed through a coating process).

In one preferred embodiment, the base member 10 is formed of a metal; the resin layer 20 is formed of a "resin material having a glass transition point of 130°C or higher; and the bonding layer 30 is formed of a "material having a glass transition point of 80°C or higher. Therefore, even when the molded product produced by means of the forming mold is dried at a high temperature as high as about 80°C, the resin layer 20 and the bonding layer 30 do not melt, whereby impairment in mold-releasability is prevented.

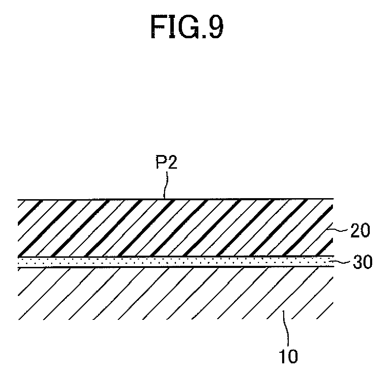

Next will be described an experiment of measuring the flatness of the flat portion of the resin layer 20 serving as an actual "forming surface" of a forming mold according to an embodiment of the present invention. In this experiment, as shown in FIG. 9, a forming mold in which a resin layer 20 is formed on the surface of a metal mold 10 by the mediation of a bonding layer 30 was employed. The entire surface of the resin layer 20 (upper surface in FIG. 9, forming surface) was a flat surface P2.

In the above embodiment, the plane shape (shape of the surface P2 as viewed from the top) is a square (300 x 300 mm). The molded product of the embodiment has been produced through the "first production method." That is, the flat-plate-like resin layer 20 having no "forming surface" was bonded to the flat-plate-like base member 10 by the mediation of the bonding layer 30, and the "forming surface" of the resin layer 20 was produced through surface grinding, to thereby realize the flat surface P2.

In the experiment, the embodiment was compared with reference molded products having the same general shape. Comparative Example 1 was a forming mold that is formed of resin, and Comparative Example 2 was a forming mold in which the surface of a metal mold was coated with a fluororesin. The plane shape (shape of the surface as viewed from the top) of each of the molded products of Comparative Examples 1 and 2 is the same as that of the present embodiment; i.e., a square (300 x 300 mm). In Comparative Example 1, similar to the present embodiment, the flat surface serving as the "forming surface" was produced through surface grinding. In Comparative Example 2, the flat surface serving as the "forming surface" is produced through coating the flat portion of the metal mold with fluororesin (the (flat) surface of the coating film not being further worked).

Table 1 shows the results. In Table 1, level 1 corresponds to the present embodiment, levels 2 and 3 correspond to the Comparative Example 1, and level 4 corresponds to the Comparative Example 2. The thickness of the base member and that of the resin layer and other properties are also shown in Table 1. Three samples were prepared at each level. The flatness of the "forming surface" of each sample was measured. The measurement was performed by means of a known 3-dimensional measuring apparatus according to the method described in JIS B0621.

**[Table 1]**

| Level | | Base member | | Resin layer | | Flatness [mm] | | |
|---|---|---|---|---|---|---|---|---|
| | | Material | Thickness [mm] | Material | Thickness [mm] | 1 | 2 | 3 |
| 1 | Embodiment | Al alloy | 8 | PTFE | 2 | 0.018 | 0.010 | 0.025 |
| 2 | Resin bulk | - | - | PTFE | 10 | 0.108 | 0.182 | 0.152 |
| 3 | Resin bulk | - | - | PTFE | 20 | 0.065 | 0.069 | 0.074 |
| 4 | Coating | Al alloy | 10 | F-coat | 0.1 | 0.043 | 0.097 | 0.068 |

As is clear from Table 1, the forming surface of the present embodiment has a flatness of 0.030 mm or less, whereas the flatness of Comparative Example 1 or 2 is greater than 0.030 mm. Conceivable reasons why the flatness of Comparative Example 1 is somewhat great are that a high-rigidity base level is not present during surface grinding of the "forming surface" and that deformation of the grinded surface is difficult to prevent. Conceivable reasons why the flatness of Comparative Example 2 is somewhat great are that the thickness of the coating film unaviodably varies and that the surface of the coating film (i.e., "forming surface") is readily deformed due to deformation of the metal mold at a high coating process temperature.

In contrast, conceivable reasons why the flatness of the embodiment is as small as 0.030 mm or less are that the resin layer 20 is difficult to deform by virtue of bonding thereof to the high-rigidity metal mold (base member 10) and that surface grinding is performed with the high-rigidity metal mold (base member 10) as a base level.

Notably, no particular limitation is imposed on the present invention. Other than the aforementioned embodiment, various modifications may be employed, within the scope of the present invention. For example, in the above embodiment, the bonding surface of the base member 10 and that of the resin layer 20 are flat. However, the bonding surfaces may be curved. In the above embodiment, the "forming surface" of the resin layer 20 has a flat portion P1. However, the flat portion may be absence. Furthermore, the recess (step) 21 may be omitted.

## Claims

1. Use of a forming mold for yielding a molded product made from a slurry containing a ceramic powder material, a dispersion medium, a gelling agent and a dispersing agent, the use including the step of casting the slurry in the forming mold, the forming mold comprising:
a base member (10) formed of metal,
a resin layer (20) which is bonded to the base member (10) and which serves as a forming surface, wherein the base member has a rigidity higher than that of the resin layer **characterized by**
a bonding layer (30) which intervenes between the base member (10) and the resin layer (20) and which bonds the base member to the resin, layer wherein:
the resin layer (20) is formed of a resin material having a glass transition point of 130°C or higher; and
the bonding layer (30) is formed of a material having a glass transition point of 80°C or higher, and wherein the bonding layer (30) is formed of a material containing no metallic element.

2. Use according to claim 1, wherein the resin layer (20) has a contact angle with respect to water of 60° or more.

3. Use according to claim 1 or claim 2, wherein the forming surface of the resin layer (20) has an unavoidably remaining depression having a maximum depth of 0.007 mm or less.

4. Use according to any one of claims 1 to 3, wherein the resin layer (20) has a minimum thickness of 0.1 mm or more.

5. Use according to claim 4, wherein a step (21) having a height of 0.1 mm or more is formed in a portion of the forming surface of the resin layer (20), the portion being present on a flat portion of the bonding surface of the base member (10).

6. Use according to any one of claims 1 to 5, wherein the resin layer (20) is formed of a fluororesin.

7. Use according to any one of claims 1 to 6, wherein a flat portion of the forming surface of the resin layer (20) has a flatness of 0.030 mm or less.

8. Use according to any one of claims 1 to 7, wherein the resin layer (20) is bonded to the base member (10) by use of an adhesive, and the surface of the bonded resin layer is worked, to thereby machine the forming surface.

9. Use according to any one of claims 1 to 7, wherein the resin layer (20) having the forming surface is formed, and the formed resin layer is bonded to the base member (10) by use of an adhesive.

## Patentansprüche

1. Verwendung einer Form zur Herstellung eines Formprodukts aus einer Aufschlämmung, die eine keramisches Pulvermaterial, ein Dispersionsmedium, ein Geliermittel und ein Dispergiermittel umfasst, wobei die Verwendung den Schritt des Gießens der Aufschlämmung in die Form umfasst, wobei die Form Folgendes umfasst:
ein Basiselement (10) aus Metall,
eine Harzschicht (20), die an das Basiselement (10) gehaftet ist und als Formungsoberfläche dient,
wobei das Basiselement eine Steifigkeit aufweist, die höher ist als die der Harzschicht,
**gekennzeichnet durch**
eine Haftschicht (30), die zwischen dem Basiselement (10) und der Harzschicht (20) liegt und das Basiselement an die Harzschicht haftet,
wobei:
die Harzschicht (20) aus einem Harzmaterial mit einer Glastemperatur von 130 °C oder höher besteht; und
die Haftschicht (30) aus einem Material mit einer Glastemperatur von 80 °C oder höher besteht und wobei die Haftschicht (30) aus einem Material besteht, das kein metallisches Element enthält.

2. Verwendung nach Anspruch 1, wobei die Harzschicht (20) einen Kontaktwinkel in Bezug auf Wasser von 60° oder mehr aufweist.

3. Verwendung nach Anspruch 1 oder Anspruch 2, wobei die Formungsoberfläche der Harzschicht (20) eine unvermeidbar verbleibende Vertiefung mit einer Maximaltiefe von 0,007 mm oder weniger aufweist.

4. Verwendung nach einem der Ansprüche 1 bis 3, wobei die Harzschicht (20) eine Mindestdicke von 0,1 mm oder mehr aufweist.

5. Verwendung nach Anspruch 4, wobei eine Stufe (21) mit einer Höhe von 0,1 mm oder mehr in einem Abschnitt der Formungsoberfläche der Harzschicht (20) ausgebildet ist, wobei der Abschnitt auf einem flachen Abschnitt der Haftfläche des Basiselements (10) vorhanden ist.

6. Verwendung nach einem der Ansprüche 1 bis 5, wobei die Harzschicht (20) aus einem Fluorharz besteht.

7. Verwendung nach einem der Ansprüche 1 bis 6, wobei ein flacher Abschnitt der Formungsoberfläche der Harzschicht (20) eine Flachheit von 0,030 mm oder weniger aufweist.

8. Verwendung nach einem der Ansprüche 1 bis 7, wobei die Harzschicht (20) durch Verwendung eines Klebers an das Basiselement (10) gehaftet ist und die Oberfläche der angehafteten Harzschicht bearbeitet wird, um die Formungsoberfläche zu bearbeiten.

9. Verwendung nach einem der Ansprüche 1 bis 7, wobei die Harzschicht (20) mit der Formungsoberfläche geformt wird und die geformte Harzschicht unter Verwendung eines Klebers an das Basiselement (10) gehaftet wird.

## Revendications

1. Utilisation d'un moule de formage afin d'obtenir un produit moulé composé d'une boue qui contient une poudre de céramique, un milieu de dispersion, un agent gélifiant et un agent de dispersion, ladite utilisation comprenant l'étape qui consiste à couler la boue dans le moule de formage, le moule de formage comprenant :
un élément de base (10) formé de métal,
une couche de résine (20) reliée à l'élément de base (10) et qui sert de surface de formage,
l'élément de base ayant une rigidité supérieure à celle de la couche de résine,
**caractérisé par**
une couche de liaison (30) située entre l'élément de base (10) et la couche de résine (20), et qui relie l'élément de base à la couche de résine,
dans laquelle :
la couche de résine (20) est formée d'une résine qui possède un point de transition vitreuse de 130°C ou plus ; et
la couche de liaison (30) est formée d'un matériau qui possède un point de transition vitreuse de 80°C ou plus, et dans laquelle la couche de liaison (30) est formée d'un matériau qui ne contient aucun élément métallique.

2. Utilisation selon la revendication 1, dans laquelle la couche de résine (20) possède un angle de contact par rapport à l'eau de 60° ou plus.

3. Utilisation selon la revendication 1 ou 2, dans laquelle la surface de formage de la couche de résine (20) possède un renfoncement inévitablement restant qui présente une profondeur maximale de 0,007 mm ou moins.

4. Utilisation selon l'une quelconque des revendications 1 à 3, dans laquelle la couche de résine (20) possède une épaisseur minimale de 0,1 mm ou plus.

5. Utilisation selon la revendication 4, dans laquelle une marche (21) qui possède une hauteur de 0,1 mm est formée dans une partie de la surface de formage de la couche de résine (20), ladite partie étant présente sur une partie plate de la surface de liaison de l'élément de base (10).

6. Utilisation selon l'une quelconque des revendications 1 à 5, dans laquelle la couche de résine (20) est formée d'une fluororésine.

7. Utilisation selon l'une quelconque des revendications 1 à 6, dans laquelle une partie plate de la surface de formage de la couche de résine (20) possède une planéité de 0,030 mm ou moins.

8. Utilisation selon l'une quelconque des revendications 1 à 7, dans laquelle la couche de résine (20) est reliée à l'élément de base (10) à l'aide d'un adhésif, et la surface de la couche de résine reliée est usinée, afin d'usiner la surface de formage.

9. Utilisation selon l'une quelconque des revendications 1 à 7, dans laquelle la couche de résine (20) qui possède la surface de formage est formée, et la couche de résine formée est reliée à l'élément de base (10) à l'aide d'un adhésif.
